# EUROPÄISCHE PATENTSCHRIFT

(11) **EP 0 935 090 B1**
(45) Veröffentlichungstag und Bekanntmachung des Hinweises auf die Patenterteilung: **18.06.2003**
(21) Anmeldenummer: 99101874.8
(22) Anmeldetag: 28.01.1999
(51) Int. Cl.: F16N 3/04

(54) **Vorrichtung für die Befestigung eines Schmiermittelvorratsbehälters an einer Schmiermittelfördereinheit**
Fastening device for a lubricant reservoir on an oil feeding device
Dispositif de fixation d'un réservoir de lubrifiant sur un distributeur de lubrifiant

(30) Priorität: 07.02.1998 DE 19805007
(43) Veröffentlichungstag der Anmeldung: 11.08.1999
(73) Patentinhaber: Atlas Copco Construction Tools GmbH, 45143 Essen (DE)
(72) Erfinder: Deimel, Thomas, 45329 Essen (DE); Sachs, Karl, 46238 Bottrop (DE)
(74) Vertreter: Vomberg, Friedhelm, Dipl.-Phys.

(56) Entgegenhaltungen:
- EP-A- 0 430 024
- EP-A- 0 678 342
- DE-A- 1 486 663
- US-A- 4 488 738

## Beschreibung

Die Erfindung betrifft einen Schmiermittelvorratsbehälter und eine Vorrichtung für dessen Befestigung an einer Schmiermittelfördereinheit, insbesondere für Baumaschinen wie hydraulisch betriebene Schlagwerke und Abbruchzangen, mit einer an der Schmiermittelfördereinheit angeordneten Behälter-Aufnahme, an der sich der Schmiermittelvorratsbehälter über einen zumindest als Führung ausgebildeten Halteabschnitt lösbar abstützt. Die Behälter-Aufnahme weist außerhalb des Bereichs des Halteabschnitts zusätzlich einen Selbstschneide-Gewindeabschnitt auf, dessen Gewindedurchmesser mit dem Außendurchmesser des in den Selbstschneide-Gewindeabschnitt hineinragenden Eingriffs-Längsabschnitts des Schmiermittelvorratsbehälters im Verlauf in Richtung auf die Schmiermittelfördereinheit derart abgestimmt ist, daß mit dem Einbringen des Schmiermittelvorratsbehälters in Richtung auf diese der Einschraubwiderstand fortlaufend ansteigt. Zumindest der Selbstschneide-Gewindeabschnitt - dessen Gewindedurchmesser, im Querschnitt gesehen, in Richtung auf die Schmiermittelfördereinheit abnimmt - besteht aus einem härteren Werkstoff als der Eingriffs-Längsabschnitt.

Aus einer Schmiermittelfördereinheit und einem Schmiermittelvorratsbehälter bestehende Schmiereinrichtungen dienen insbesondere dazu, hochbeanspruchte Lagerstellen hydraulisch betriebener Schlagwerke und Abbruchzangen mit Fetten zu versorgen, die unter Umständen einen sehr hohen Festschmierstoffgehalt aufweisen, wie beispielsweise Meißelpasten. Die Schmiermittelfördereinheit - die im einfachsten Fall einen innerhalb eines Förderraums axial beweglichen Förderkolben aufweist - kann an sich beliebig ausgebildet sein, sofern sie geeignet ist, das in dem Schmiermittelvorratsbehälter befindliche Schmiermittel aufzunehmen und in Richtung auf die zu versorgende Lagerstelle der betreffenden Baumaschine weiterzufördern.

Ein Schmiermittelvorratsbehälter und eine Vorrichtung für dessen Befestigung an einer Schmiermittelfördereinheit mit einer an dieser angeordneten Behälter-Aufnahme, an der sich der Schmiermittelvorratsbenälter über einen zumindest als Führung ausgebildeten Halteabschnitt lösbar abstützt, sind aus der Druckschrift EP 0430024 B1 bekannt; dabei steht die Schmiermittelfördereinheit mit der Meißel-Führung eines hydraulisch betriebenen Schlagwerks in Verbindung und weist eine Behälter-Aufnahme auf, an der der Schmiermittelvorratsbehälter über einen mit einem Innengewinde ausgestatteten Halteabschnitt lösbar befestigt ist.

Insbesondere bei Verwendung von Schmiermittelvorratsbehältern, die aus einem weichen und verhältnismäßig wenig widerstandsfähigen Werkstoff wie Kunststoff gefertigt sind, besteht die Gefahr, daß der Schmiermittelvorratsbehälter sich bei stoßartiger Bewegung der Schmiermittelfördereinheit in der Behälter-Aufnahme zumindest lockert und/oder durch eine unzulässig hohe Krafteinwirkung beim Einbringen in die Behälter-Aufnahme beschädigt wird. Dabei ist zu berücksichtigen, daß die Schmiermittelfördereinheit mit Rücksicht auf die Viskosität des Schmiermittels zumindest in der Nähe der betreffenden Baumaschine (beispielsweise am hydraulisch betriebenen Schlagwerk selbst) angeordnet und den davon ausgehenden Bewegungen ausgesetzt ist.

Aus der Druckschrift EP 0678342 A2 ist eine Einrichtung der eingangs erwähnten Gattung bekannt, die sich aus einem Behälter in Form eines Mischers oder einer sonstigen Verteilervorrichtung sowie aus einem lösbar daran befestigten Anschlußelement zusammensetzt, durch welches die hergestellte Mischung aus dem Bereich des Mischers nach außen weitertransportiert wird.
Die in dem Anschlußelement ausgebildete Behälter-Aufnahme weist außerhalb des den Mischer abstützenden Halteabschnitts zusätzlich einen Selbstschneide-Gewindeabschnitt auf, dessen Gewindedurchmesser - im Querschnitt gesehen - in Richtung auf die vom Mischer abgewandte Seite geradlinig abnimmt.
Der Mischer selbst ist mit einem stufenförmig ausgebildeten Eingriffs-Längsabschnitt ausgestattet; dieser stützt sich einerseits an dem Halteabschnitt und dem Selbstschneide-Gewindeabschnitt sowie andererseits an einem weiteren Führungsabschnitt des Anschlußelements ab, welcher dem Selbstschneide-Gewindeabschnitt in Richtung auf den Mischer vorausgeht und einen größeren Durchmesser aufweist als der auf den Eingriffs-Längsabschnitt einwirkende Selbstschneide-Gewindeabschnitt. Die in Rede stehende Anordnung ist weiterhin derart ausgebildet, daß der Mischer beim Einbringen in die Behälter-Aufnahme des Anschlußelements sich zunächst über den Halteabschnitt an dieser abstützt, bevor anschließend sein Eingriffs-Längsabschnitt den Selbstschneide-Gewindeabschnitt erreicht und dabei eine Schraubverbindung erzeugt wird.

Der Erfindung liegt die Aufgabe zugrunde, eine Befestigungsvorrichtung für einen Schmiermittelvorratsbehälter zu entwickeln, welche hinsichtlich der Störanfälligkeit im Bereich des Schmiermittelvorratsbehälters verbesserte Eigenschaften aufweist. Insbesondere soll die Befestigungsvorrichtung es ermöglichen, auch aus weicheren, nachgiebigen Werkstoffen bestehende Schmiermittelvorratsbehälter zu verwenden. Auch bei derart ausgebildeten Schmiermittelvorratsbehältern soll die Verbindung mit der Befestigungsvorrichtung besonders lockerungssicher sein, d.h. auch Stoßoder Rüttelbewegungen widerstehen, die insbesondere beim Arbeitseinsatz von Schlagwerken oder Abbruchzangen auftreten.

Die Aufgabe wird durch einen Schmiermittelvorratsbehälter und eine Befestigungsvorrichtung mit den Merkmalen des Anspruchs 1 gelöst. Danach ist der Gewindedurchmesser des Selbstschneide-Gewindeabschnitts - welcher in Richtung auf die Schmiermittelfördereinheit abnimmt - zusätzlich derart ausgebildet, daß sein den größten Gewindedurchmesser aufweisender Anfangsbereich einen größeren Durchmesser aufweist als der Außendurchmesser des Eingriffs-Längsabschnitts. Letzterer kann auch die Form eines Zylinders aufweisen mit der Folge, daß gegebenenfalls auch entsprechend einfach ausgebildete Schmiermittelvorratsbehälter zum Einsatz kommen können, sofern diese im Bereich des Eingriffs-Längsabschnitts eine ausreichende Wandstärke aufweisen.

Grundsätzlich kann die Erfindung auch in der Weise ausgeführt sein, daß der Gewindedurchmesser des Selbstschneide-Gewindeabschnitts und/oder der Außendurchmesser des Eingriffs-Längsabschnitts in Richtung auf die Schmiermittelfördereinheit abnehmen bzw. abnimmt, und zwar auch durchgehend oder teilweise kurvenförmig gekrümmt.
Bei einer besonders einfachen Ausführungsform nimmt der Gewindedurchmesser des Seibstschneide-Gewindeabschnitts - im Querschnitt gesehen - in Richtung auf die Schmiermittelfördereinheit geradlinig ab (Anspruch 2).
Wesentlich im Hinblick auf die Ausgestaltung des Selbstschneide-Gewindeabschnitts ist es, daß der Einschraubwiderstand nicht einen unzulässig hohen Wert annimmt, bevor der Schmiermittelvorratsbehälter bezüglich der Schmiermittelfördereinheit seine vorgegebene Betriebsstellung erreicht hat. Mit anderen Worten ausgedrückt, muß der Selbstschneide-Gewindeabschnitt derart an die Form des Eingriffs-Längsabschnitts angepaßt sein, daß der Schmiermittelvorratsbeälter beim Einschrauben in die Behälter-Aufnahme nicht überbeansprucht und möglicherweise beschädigt wird.

Der Erfindungsgegenstand kann dadurch weitergehend ausgebildet sein, daß die Behälter-Aufnahme mit zumindest einem Dichtelement ausgestattet ist, welches dem Selbstschneide-Gewindeabschnitt in Richtung auf die Schmiermittelfördereinheit vorgelagert ist und an dem Schmiermittelvorratsbehälter anliegt (Anspruch 3).
Das zumindest eine Dichtelement hat nicht nur eine zusätzliche Abstützung des Schmiermittelvorratsbehälters zur Folge; es dient auch dazu, auf dem Außenumfang des Schmiermittelvorratsbehälters befindliche Verunreinigungen abzustreifen und den dahinterliegenden Selbstschneide-Gewindeabschnitt sowie den Halteabschnitt gegen die Außenumgebung abzuschirmen.
Schließlich trägt die Ausstattung mit zumindest einem Dichtelement auch dazu bei, Stoß- und Rüttelbewegungen zwischen der Behälter-Aufnahme und dem Schmiermittelvorratsbehälter abzumildern.
Vorzugsweise ist der Halteabschnitt bezüglich des Selbstschneide-Gewindeabschnitts derart angeordnet, daß der Schmiermittelvorratsbehälter sich beim Einbringen in die Behälter-Aufnahme zunächst über den Halteabschnitt an dieser abstützt, bevor anschließend sein Eingriffs-Längsabschnitt den Selbstschneide-Abschnitt erreicht (Anspruch 4).
Dies setzt voraus, daß der Schmiermittelvorratsbehälter auf der der Schmiermittelfördereinheit zugewandten Seite einen Halteabschnitt aufweist, der bezüglich des Eingriffs-Längsabschnitts vorspringt und länger ausgebildet ist als dieser.
Diese Ausgestaltung hat zur Folge, daß sich der Halteabschnitt bereits in einem Führungsabschnitt der Behälter-Aufnahme abstützt und somit die Lage des Schmiermittelvorratsbehälters bezüglich der Behälter-Aufnahme festlegt, bevor der Selbstschneide-Gewindeabschnitt wirksam wird.

Der Erfindungsgegenstand kann vorteilhaft auch in der Weise ausgebildet sein, daß der Halteabschnitt des Schmiermittelvorratsbeälters - ebenso wie der mit diesem zusammenwirkende Führungsabschnitt der Behälter-Aufnahme - ein Anschlußgewinde aufweist, über welches der Schmiermittelvorratsbehälter in seiner Betriebsstellung mit der Behälter-Aufnahme verschraubt ist (Anspruch 5). Unter Einwirkung des Anschlußgewindes kann der Eingriffs-Längsabschnitt gezielt und schonend in den Selbstschneide-Gewindeabschnitt eingefädelt werden. Auf diese Weise wird auch die Gefahr herabgesetzt, daß der Eingriffs-Längsabschnitt bei wiederholten Ein- und Ausbauvorgängen beschädigt wird.
Das Anschlußgewinde des Halteabschnitts und des Führungsabschnitts weist dabei die gleiche Steigung auf wie der Selbstschneide-Gewindeabschnitt.

Die Erfindung wird nachfolgend anhand eines in der Zeichnung dargestellten Ausführungsbeispiels im einzelnen erläutert.
Es zeigen:
- Fig. 1: in schematischer Darstellung als Teilschnitt eine Schmiermittelfördereinheit mit in Betriebsstellung befindlichem Schmiermittelvorratsbehälter,
- Fig. 2a: eine Teildarstellung entsprechend Einzelheit E in Fig. 1, wobei der Schmiermittelvorratsbehälter noch nicht mit dem Selbstschneide-Gewindeabschnitt der Behälter-Aufnahme in Eingriff steht, und
- Fig. 2b: eine Darstellung entsprechend Fig. 2a, wobei der Schmiermittelvorratsbehälter bezüglich der Behälter-Aufnahme annähernd seine Betriebsstellung erreicht hat.

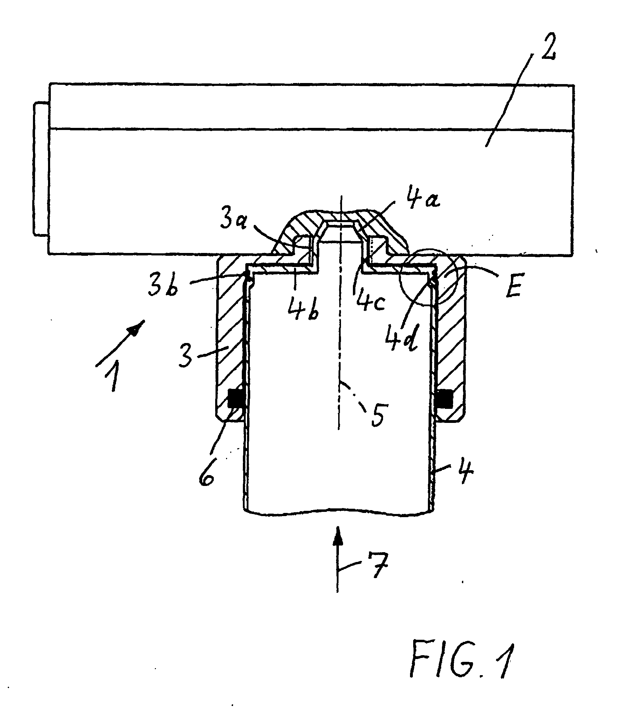

Die in Fig. 1 dargestellte Schmiereinrichtung 1 weist als Hauptbestandteile eine nach Art einer Axialkolbenpumpe ausgebildete Schmiermittelfördereinheit 2 mit einer an ihr befestigen Behälter-Aufnahme 3 und einen mit dieser verschraubten, aus Kunststoff bestehenden Schmiermittelvorratsbehälter 4 auf. Dieser ist auf seiner der Schmiermittelfördereinheit 2 zugewandten Seite über einen Halteabschnitt 4a an den nicht dargestellten Förderraum der Schmiermittelfördereinheit 2 angeschlossen, wobei der Halteabschnitt über die Behälter-Aufnahme 3 hinausragt.
Die Längsachse der Behälter-Aufnahme 3 - die mit derjenigen des Schmiermittelvorratsbehälters 4 zusammenfällt - ist mit 5 bezeichnet.

Der Halteabschnitt 4a ist oberhalb der Stirnwand 4b des Schmiermittelvorratsbehälters mit einem außenliegenden Anschlußgewinde 4c ausgestattet, welches in ein innenliegendes Anschlußgewinde 3a am Führungsabschnitt der Behälter-Aufnahme eingreift.

Unterhalb des Anschlußgewindes 3a ist die Innenfläche der Behälter-Aufnahme 3 mit einem Selbstschneide-Gewindeabschnitt 3b ausgestattet, mit dem der Eingriffs-Längsabschnitt 4d des Schmiermittelvorratsbehälters in der dargestellten Betriebsstellung zusätzlich verschraubt ist.
Der Eingriffs-Längsabschnitt 4d liegt unterhalb des Halteabschnitts 4a zumindest in der Nähe der Stirnwand 4b.

In Richtung auf die Schmiermittelfördereinheit 2 gesehen ist dem Selbstschneide-Gewindeabschnitt 3b innerhalb der Behälter-Aufnahme 3 ein in dieser gehaltener Dichtring 6 vorgelagert, welcher auch an der Außenfläche des Schmiermittelvorratsbehälters 4 nachgiebig anliegt.

Wie die in Rede stehende Darstellung weiterhin erkennen läßt, ist das Anschlußgewinde 3a und 4c bezüglich des Selbstschneide-Gewindeabschnitts 3b derart angeordnet und ausgebildet, daß beim Einbringen des Schmiermittelvorratsbehälters in Richtung des Pfeiles 7 in die Behälter-Aufnahme 3 zunächst die Anschlußgewinde 3a, 4c miteinander in Eingriff kommen, bevor anschließend der Eingriffs-Längsabschnitt 4d den Selbstschneide-Gewindeabschnitt 3b erreicht und mit diesem verschraubt wird.

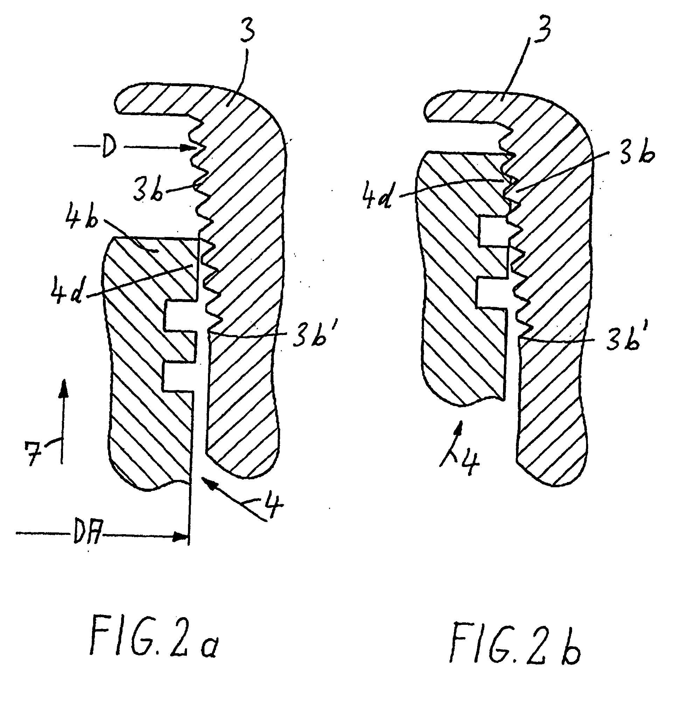

Fig. 2a zeigt die Lage eines neuen, unbenutzten Schmiermittelvorratsbehälters 4 bezüglich der Behälter-Aufnahme 3, nachdem bereits eine Verbindung zwischen dem (in Fig. 1 dargestellten) Anschlußgewinde 3a und 4c hergestellt worden ist.
Der Eingriffs-Längsabschnitt 4d ist noch nicht vom Selbstschneide-Gewindeabschnitt 3b beeinflußt und weist daher noch seine ursprüngliche, zylindrische Form auf.

Die in Rede stehende Darstellung läßt weiterhin erkennen, daß der Selbstschneide-Gewindeabschnitt 3b einen Durchmesser D aufweist, der in Richtung auf die Schmiermittelfördereinheit 2 (d.h. in der Darstellung nach oben) geradlinig abnimmt. Der Durchmesser des Selbstschneide-Gewindeabschnitts in dessen Anfangsbereich 3b' ist im übrigen größer bemessen als der Außendurchmesser DA des in den Selbstschneide-Gewindeabschnitt hineinragenden Eingriffs-Längsabschnitts 4d.

Falls der Schmiermittelvorratsbehälter 4 weiter in Richtung des Pfeiles 7 in die Behälter-Aufnahme 3 eingeschraubt wird, wirkt der Selbstschneide-Gewindeabschnitt 3b in der Weise auf den Eingriffs-Längsabschnitt 4d ein, daß dort ein entsprechend ausgebildetes Außengewinde erzeugt wird (Fig. 2b).
Auf diese Weise entsteht zwischen den Teilen 3 und 4 zusätzlich eine genau angepaßte Schraubverbindung, welche unerwünschte Lockerungsvorgänge aufgrund von Stoß- oder Rüttelbewegungen verhindert.
Der Verlauf des Durchmessers D am Selbstschneide-Gewindeabschnitt 3b ist dabei so gewählt, daß der Schmiermittelvorratsbehälter 4 ohne unzulässig hohe Beanspruchung seine Betriebsstellung bezüglich der Behälter-Aufnahme 3 einnehmen kann.
Im Gegensatz zum Schmiermittelvorratsbehälter 4 ist die Behälter-Aufnahme 3 - zumindest im Bereich, über den sich der Selbstschneide-Gewindeabschnitt 3b erstreckt - aus einem härteren, metallischen Werkstoff gefertigt als der Schmiermittelvorratsbehälter 4.
Darüber hinaus sollte der betreffende metallische Werkstoff derart beschaffen sein, daß er im Zusammenwirken mit dem Kunststoff des Schmiermittelvorratsbehälters ausreichend gute Gleiteigenschaften aufweist.

Abweichend von der dargestellten Ausführungsform kann der Schmiermittelvorratsbehälter 4 auch derart ausgebildet sein, daß er lediglich im Bereich seines Eingriffs-Längsabschnitts 4d aus einem weicheren Werkstoff besteht als der Selbstschneide-Gewindeabschnitt 3b.

Nach der Verformung des Eingriffs-Längsabschnitts 4d unter Einwirkung des Selbstschneide-Gewindeabschnitts 3b kann der betreffende Schmiermittelvorratsbehälter 4 auch mehrfach verwendet, d.h. ausgebaut und nach Befüllen erneut eingeschraubt werden. Dabei wird das Einbringen in die Behälter-Aufnahme 3 dadurch erleichtert, daß der Schmiermittelvorratsbehälter über seinen Halteabschnitt 4a eine Führung erhält; diese vermindert auch die Gefahr, daß das im Bereich 4d vorhandene . Außengewinde beim erneuten Einbringen des Schmiermittelvorratsbehälters in die Behälter-Aufnahme vorzeitig beschädigt wird.

Der mit der Erfindung erzielte Vorteil besteht insbesondere darin, daß ohne vorhergehende zusätzliche Bearbeitung einfach aufgebauter Schmiermittelvorratsbehälter selbsttätig eine - gegebenenfalls zusätzliche - Schraubverbindung erzeugt wird, über welche der Schmiermittelvorratsbehälter sicher mit der Behälter-Aufnahme verbunden wird. Eine Beschädigung des Schmiermittelvorratsbehälters bei der Montage oder im Betrieb und der Ausfall der Schmiermittelfördereinheit werden dadurch weitgehend verhindert.

## Patentansprüche

1. Schmiermittelvorratsbehälter (4) und Vorrichtung für dessen Befestigung an einer Schmiermittelfördereinheit (2), insbesondere für Baumaschinen wie hydraulisch betriebene Schlagwerke und Abbruchzangen, mit einer an der Schmiermittelfördereinheit (2) angeordneten Behälter-Aufnahme (3), an der sich der Schmiermittelvorratsbehälter über einen zumindest als Führung ausgebildeten Halteabschnitt (4a) lösbar abstützt, wobei die Behälter-Aufnahme (3) außerhalb des Bereichs des Halteabschnitts (4a) zusätzlich einen Selbstschneide-Gewindeabschnitt (3b) aufweist, dessen Gewindedurchmesser (D) mit dem Außendurchmesser (DA) des in den Selbstschneide-Gewindeabschnitt (3b) hineinragenden Eingriffs-Längsabschnitts (4d) des Schmiermittelvorratsbehälters (4) im Verlauf in Richtung auf die Schmiermittelfördereinheit (2) derart abgestimmt ist, daß mit dem Einbringen des Schmiermittelvorratsbehälters (4) in Richtung auf diese der Einschraubwiderstand fortlaufend ansteigt, und wobei zumindest der Selbstschneide-Gewindeabschnitt (3b) - dessen Gewindedurchmesser (D), im Querschnitt gesehen, in Richtung auf die Schmiermittelfördereinheit (2) abnimmt - aus einem härteren Werkstoff besteht als der Eingriffs-Längsabschnitt (4d),
**dadurch gekennzeichnet, daß** der den größten Gewindedurchmesser aufweisende Anfangsbereich (3b') des Selbstschneidegewindeabschnitts (3b) hinsichtlich seines Durchmessers größer ausgebildet ist als der Außendurchmesser (DA) des Eingriffs-Längsabschnitts (4d).

2. Schmiermittelvorratsbehälter und Befestigungsvorrichtung nach Anspruch 1, **dadurch gekennzeichnet, daß** der Gewindedurchmesser (D) des Selbstschneide-Gewindeabschnitts (3b) - im Querschnitt gesehen - in Richtung auf die Schmiermittelfördereinheit (2) geradlinig abnimmt.

3. Schmiermittelvorratsbehälter und Befestigungsvorrichtung nach zumindest einem der vorhergehenden Ansprüche, **dadurch gekennzeichnet, daß** die Behälter-Aufnahme (3) mit zumindest einem Dichtelement (6) ausgestattet ist, welches dem Selbstschneide-Gewindeabschnitt (3b) in Richtung auf die Schmiermittelfördereinheit (2) vorgelagert ist und an dem Schmiermittelvorratsbehälter (4) anliegt.

4. Schmiermittelvorratsbehälter und Befestigungsvorrichtung nach zumindest einem der vorhergehenden Ansprüche, **dadurch gekennzeichnet, daß** der Halteabschnitt (4a) bezüglich des Selbstschneide-Gewindeabschnitts (3b) derart angeordnet ist, daß der Schmiermittelvorratsbehälter (4) sich beim Einbringen in die Behälter-Aufnahme (3) zunächst über den Halteabschnitt (4a) an dieser abstützt, bevor anschließend sein Eingriffs-Längsabschnitt (4d) den Selbstschneide-Gewindeabschnitt (3b) erreicht.

5. Schmiermittelvorratsbehälter und Befestigungsvorrichtung nach zumindest einem der vorhergehenden Ansprüche, **dadurch gekennzeichnet, daß** der Halteabschnitt (4a) des Schmiermittelvorratsbehälters (4) - ebenso wie der mit diesem zusammenwirkende Führungsabschnitt (3a) der Behälter-Aufnahme (3) - ein Anschlußgewinde (4c) aufweist, über welches der Schmiermittelvorratsbehälter (4) in seiner Betriebsstellung mit der Behälter-Aufnahme (3) verschraubt ist.

## Claims

1. Lubricant reservoir (4) and device for fastening same to a lubricant transport unit (2), in particular for construction machines such as hydraulically operated impact devices and demolition pincers, with a reservoir receiving means (3), which is disposed on the lubricant transport unit (2) and on which the lubricant reservoir is detachably supported via a holding section (4a) constructed at least as a guide means, and outside the region of the holding section (4a) said reservoir receiving means (3) additionally has a self-tapping threaded section (3b), the thread diameter (D) of which is matched to the outside diameter (DA) of the longitudinal engaging section (4d) of the lubricant reservoir (4) projecting into the self-tapping threaded section (3b) in the course towards the lubricant transport unit (2) in such a manner that on movement of the lubricant reservoir (4) towards said transport unit the tightening resistance continuously increases, and wherein at least the self-tapping threaded section (3b) - its thread diameter (D) decreasing in the direction of the lubricant transport unit (2), viewed in cross-section - is made of a harder material than 'the longitudinal engaging section (4d), **characterised in that** the leading region (3b') of the self-tapping threaded section (3b) with the largest thread diameter is constructed to be larger with respect to its diameter than the outside diameter (DA) of the longitudinal engaging section (4d).

2. Lubricant reservoir and fastening device according to Claim 1, **characterised in that** the thread diameter (D) of the self-tapping threaded section (3b) - viewed in cross-section - decreases rectilinearly towards the lubricant transport unit (2).

3. Lubricant reservoir and fastening device according to at least one of the preceding claims, **characterised in that** the reservoir receiving means (3) is fitted with at least one sealing element (6), which is located in front of the self-tapping threaded section (3b) in the direction of the lubricant transport unit (2) and abuts against the lubricant reservoir (4).

4. Lubricant reservoir and fastening device according to at least one of the preceding claims, **characterised in that** the holding section (4a) is disposed with respect to the self-tapping threaded section (3b) in such a way that the lubricant reservoir (4) is firstly supported on the reservoir receiving means (3) via the holding section (4a) on insertion into said receiving means before its longitudinal engaging section (4d) subsequently reaches the self-tapping threaded section (3b).

5. Lubricant reservoir and fastening device according to at least one of the preceding claims, **characterised in that** the holding section (4a) of the lubricant reservoir (4) - like the guide section (3a) of the reservoir receiving means (3) cooperating therewith - has a connection thread (4c), via which in its operating position the lubricant reservoir (4) is screwed to the reservoir receiving means (3).

## Revendications

1. Réservoir de lubrifiant (4) et dispositif pour fixer celui-ci sur une unité à transporter le lubrifiant (2), en particulier pour des machines de chantier telles que moutons et pinces de démolition actionnés de façon hydraulique, avec un logement de réservoir (3) qui est disposé sur l'unité à transporter le lubrifiant (2) et sur lequel le réservoir de lubrifiant prend appui de manière amovible par un tronçon de retenue (4a) réalisé au moins comme guidage, le logement de réservoir (3) présentant à l'extérieur de la zone du tronçon de retenue (4a) en sus un tronçon fileté autotaraudeur (3b) dont le diamètre du filetage (D) est accordé, dans l'allure en direction de l'unité à transporter le lubrifiant (2), avec le diamètre extérieur (DA) du tronçon longitudinal de prise (4d) du réservoir de lubrifiant (4), qui se projette dans le tronçon fileté autotaraudeur (3b), d'une telle manière que, avec l'introduction du réservoir de lubrifiant (4) en direction de ladite unité, la résistance de vissage augmente continûment, et au moins le tronçon fileté autotaraudeur (3b) - dont le diamètre du filetage (D), vu en coupe transversale, diminue en direction de l'unité à transporter le lubrifiant (2) - étant fait d'un matériau plus dur que le tronçon longitudinal de prise (4d), **caractérisés par le fait que** la zone initiale (3b') du tronçon fileté autotaraudeur (3b), laquelle présente le plus grand diamètre du filetage, est réalisée de manière à être plus grande, quant à son diamètre, que le diamètre extérieur (DA) du tronçon longitudinal de prise (4d).

2. Réservoir de lubrifiant et dispositif de fixation selon la revendication 1, **caractérisés par le fait que** le diamètre du filetage (D) du tronçon fileté autotaraudeur (3b) - vu en coupe transversale - diminue de façon rectiligne en direction de l'unité à transporter le lubrifiant (2).

3. Réservoir de lubrifiant et dispositif de fixation selon l'une au moins des revendications précédentes, **caractérisés par le fait que** le logement de réservoir (3) est équipé d'au moins un élément d'étanchéité (6) qui est placé devant le tronçon fileté autotaraudeur (3b) en direction de l'unité à transporter le lubrifiant (2) et qui s'appuie sur le réservoir de lubrifiant (4).

4. Réservoir de lubrifiant et dispositif de fixation selon l'une au moins des revendications précédentes, **caractérisés par le fait que** le tronçon de retenue (4a) est disposé quant au tronçon fileté autotaraudeur (3b) de telle manière que, lors de l'introduction dans le logement de réservoir (3), le réservoir de lubrifiant (4) prend appui sur celui-ci d'abord par le tronçon de retenue (4a), avant que, ensuite, son tronçon longitudinal de prise (4d) atteigne le tronçon fileté autotaraudeur (3b).

5. Réservoir de lubrifiant et dispositif de fixation selon l'une au moins des revendications précédentes, **caractérisés par le fait que** le tronçon de retenue (4a) du réservoir de lubrifiant (4) - aussi bien que le tronçon de guidage (3a) du logement de réservoir (3), qui agit de concert avec celui-ci - présente un filet de raccordement (4c) par lequel, dans sa position de service, le réservoir de lubrifiant (4) est vissé avec le logement de réservoir (3).
